(19) Europäisches Patentamt
European Patent Office
Office européen des brevets

(11) EP 1 084 429 B1

(12) **FASCICULE DE BREVET EUROPEEN**

(45) Date de publication et mention de la délivrance du brevet:
**16.04.2003 Bulletin 2003/16**

(21) Numéro de dépôt: **99923693.8**

(22) Date de dépôt: **08.06.1999**

(51) Int Cl.$^7$: **G02B 5/18**

(86) Numéro de dépôt international:
**PCT/FR99/01348**

(87) Numéro de publication internationale:
**WO 99/064901 (16.12.1999 Gazette 1999/50)**

(54) **PROCEDE DE FABRICATION DE COMPOSANTS OPTIQUES PAR REPLICATION**

VERFAHREN ZUR HERSTELLUNG VON OPTISCHEN KOMPONENTEN DURCH REPLIKATION

METHOD FOR MAKING OPTICAL COMPONENTS BY REPLICATION

(84) Etats contractants désignés:
**DE GB IT NL**

(30) Priorité: **09.06.1998 FR 9807218**

(43) Date de publication de la demande:
**21.03.2001 Bulletin 2001/12**

(73) Titulaire: **Commisariat à l'énergie Atomique 75752 Paris 15ème (FR)**

(72) Inventeurs:
- **BELLEVILLE, Philippe**
**F-92400 Courbevoie (FR)**
- **GACOIN, Philippe**
**F-91191 Gif sur Yvette (FR)**
- **KALADGEW, Sophie**
**F-94190 Villeneuve Saint Georges (FR)**

(74) Mandataire: **Audier, Philippe André et al**
**Brevatome,**
**3, rue du Docteur Lancereaux**
**75008 Paris (FR)**

(56) Documents cités:
**EP-A- 0 332 790** **US-A- 5 759 683**

- **PATENT ABSTRACTS OF JAPAN vol. 096, no. 002, 29 février 1996 (1996-02-29) & JP 07 261010 A (SHIMADZU CORP), 13 octobre 1995 (1995-10-13)**
- **PATENT ABSTRACTS OF JAPAN vol. 008, no. 171 (P-293), 8 août 1984 (1984-08-08) & JP 59 065810 A (HITACHI SEISAKUSHO KK), 14 avril 1984 (1984-04-14)**
- **GALE M T: "Replication techniques for diffractive optical elements" MICROELECTRONIC ENGINEERING, vol. 34, no. 3-4, décembre 1997 (1997-12), page 321-339 XP004108296**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 084 429 B1

## Description

La présente invention concerne un procédé de fabrication de composants optiques par réplication à partir d'une matrice.

L'invention concerne également les composants optiques obtenus par ce procédé.

Ces composants optiques sont en particulier des composants optiques diffractifs, tels que des réseaux de diffraction de la lumière qui sont utilisés dans les dispositifs optiques afin de dévier un faisceau lumineux selon un ordre de diffraction privilégié.

Les composants diffractifs sont notamment mis en oeuvre dans les systèmes lasers, où le réseau de diffraction peut remplir plusieurs fonctions comme la déviation, la séparation chromatique et éventuellement la focalisation et ceci avec un minimum de matière traversée ; on se reportera à ce propos à la demande de brevet français n°96 11378 qui est relative à un réseau de diffraction focalisant de très grande efficacité.

Sur la figure 1, on a représenté une vue en coupe transversale schématique d'une réseau de diffraction classique.

Ce réseau 1 présente un profil de gravure formé d'une succession de motifs gravés élémentaires qui sont par exemple la forme de créneaux.

L'efficacité d'un tel composant dépend essentiellement des caractéristiques du profil de la gravure.

Ces caractéristiques sont:

- la profondeur h de la gravure du matériau constituant le réseau, cette profondeur peut être optimisée afin de donner une efficacité de diffraction maximale ;
- l'espacement a ;
- le pas ou période b ;
- le "taux de remplissage" t, qui est défini par le rapport $t = \frac{(b - a)}{b}$ qui est inférieur à 1, la profondeur optimum à donner aux gravures est également fonction de ce taux de remplissage ;
- le "rapport d'aspect" r qui est défini par le rapport $r = \frac{(b - a)}{h}$

Plus la profondeur est importante, plus le rapport d'aspect est petit (r<1), mais l'on parle alors dans ce cas de profil à fort rapport d'aspect car on raisonne par rapport à une largeur de profil (b-a) unitaire : ainsi par exemple dans ce qui suit, un rapport d'aspect de 1:1 est-il facile à répliquer, tandis qu'un rapport d'aspect de 1:5 est difficile à répliquer.

Il est évident que, de manière générale un procédé de réplication fidèle doit être capable de fournir des objets répliqués ou copies possédant les mêmes caractéristiques que l'objet maître ou matrice.

Cette exigence doit être remplie dans le cas de la fabrication des composants optiques et plus particulièrement des composants optiques diffractifs, par réplication.

Ainsi dans le cas d'un réseau de diffraction, le procédé de fabrication d'un tel réseau par réplication doit-il assurer la reproduction exacte du profil de gravure copié, c'est-à-dire transposer avec la plus grande fidélité les caractéristiques du profil de gravure définies ci-dessus, à savoir profondeur, espacement, période, taux de remplissage, et rapport d'aspect.

En effet, de la fidélité de la reproduction des caractéristiques du profil copié dépendent les propriétés optiques, et notamment l'efficacité de la diffraction, qui doivent être analogues à celles du maître.

Par ailleurs le matériau utilisé pour fabriquer la réplique doit posséder les propriétés requises pour l'application souhaitée par exemple dans un système laser.

Les procédés de réplication décrits dans la littérature peuvent être classés en trois catégories principales, à savoir l'emboutissage ou pressage à chaud ("hot embossing" en anglais), le moulage par injection ("injection moulding" en anglais) et la coulée ("casting" en anglais).

Le procédé de pressage est une technologie largement employée par l'industrie pour la production d'hologrammes notamment, comme cela est décrit dans le document de Kluepfel et al., 1991, Holography Market Place, Berkeley, Ca.USA, Ross Books.

Cette technique repose sur le principe consistant à presser un matériau thermoplastique tel que du poly (chlorure de vinyle) ou du polycarbonate, porté en température, sur un support plan, à l'aide d'une matrice.

Cette technique est particulièrement adaptée à la reproduction de profils d'une profondeur inférieure à 1 µm, ou plus profonds mais à faible rapport d'aspect c'est-à-dire avec r supérieur à 1.

Cependant, le document de Knope et Gale, 1980, Surface-Relief Images for Colour Reproduction, London, Focal Press décrit la réplication avec un procédé de laboratoire, de réseaux avec un rapport d'aspect de 1/4,3.

Le document de Becker et al., 1986, LIGA Process, Microelectronic Engineering 4, 35-36 décrit une technologie destinée à la réplication par pressage de microstructures à fort profil d'aspect.

La seconde grande catégorie de procédés de réplication est constituée par le moulage, qui a été développé

en masse pour la production de lentilles de Fresnel comme cela est décrit dans le document de Miller et al., 1951, JOSA, 41, 807-815, de condenseurs de rétroprojection, ou de compact-disques audio ou vidéo comme cela est décrit dans le document de Teyssier et al., 1990, Lasers & Optronics, Dec. 1990, 50-53.

Ce procédé permet par injection sous pression d'un matériau plastique ramolli tel qu'un polycarbonate, poly (méthacrylate de méthyle), ou autre, dans un moule profilé, de reproduire avec fidélité une microstructure.

Néanmoins, la fabrication industrielle de répliques de haute résolution c'est-à-dire très inférieure à 1 μm et grande profondeur c'est-à-dire supérieure à 1 μm n'est pas maîtrisée simultanément.

Enfin, le procédé de réplication par coulée, décrit par exemple dans le document de Hutley 1982, Diffraction Gratings, 125-127, academic Press, London, consiste en application d'un matériau sur la surface d'une matrice profilée et son formage (coulée) assisté en température, ou par photopolymérisation comme cela est indiqué dans les documents de Coops, 1990, Philips J. Res, 44, 481-500 et de Shvartsman, 1993, SPIE Critical Review Proceedings, CR49, 117-137, SPIE, WA, USA.

Ce procédé s'applique particulièrement dans le cas d'un besoin en profils à haute résolution et fort rapport d'aspect. Cependant, les temps de cycle sont importants.

Par ailleurs des matériaux sol-gel, non plastiques, ont été utilisées dans la préparation d'optiques diffractives ou de guides d'onde par l'INM (Institut für neue Materialien) de Sarrebrück.

Ainsi le document de Krug et al., 1994, New J. Chem, 18, 1125-1134 décrit-il l'expérimentation du procédé de pressage et de photoréticulation sous UV sur le matériau hybride $Zr(OR)_4/CH_2\text{-}CCH_3COOH/(RO)_3Si(CH_2)_3OCOC(CH_3)=CH_2$ pour répliquer des réseaux de diffraction en transmission dans le domaine visible ou proche infrarouge.

Aucun des procédés décrits ci-dessus ne répond simultanément à l'ensemble des exigences déjà mentionnées plus haut pour un procédé de fabrication d'un composant optique, tel qu'un réseau de diffraction, par réplication, c'est-à-dire une reproduction fidèle, exacte du profil de gravure défini par les caractéristiques précitées et des propriétés optique ou autres requises pour l'application souhaitée telles que transmission (transparence), plasticité...

En particulier aucun des procédés de l'art antérieur ne permet de manière simple la réplication fidèle de matrices à forte densité et à fort profil d'aspect.

Par ailleurs, aucun des procédés de l'art antérieur, ne permet de satisfaire, outre les exigences déjà mentionnées, les contraintes supplémentaires rencontrées dans les lasers de puissance.

Ces lasers dont la future génération aura par exemple une puissance de 500 TW à 0,35 μm nécessitent l'utilisation de réseaux de diffraction de grandes dimensions, par exemple de 400 sur 440 mm, de haute efficacité, et surtout de haute tenue au flux laser dans un domaine pouvant aller par exemple du proche ultraviolet au proche infrarouge.

Il existe donc un besoin pour un procédé de fabrication de composants optiques par réplication qui réponde simultanément, à l'ensemble des exigences et contraintes citées plus haut.

Il existe en particulier un besoin pour un procédé permettant de manière simple la réplication fidèle de matrices à forte densité et à fort profil d'aspect.

Il existe encore un besoin pour un procédé permettant en outre de préparer des composants optiques tels que des réseaux de diffraction de grande dimension.

Il existe enfin un besoin pour un procédé permettant la réplication fidèle de composants optiques, quel que soit le matériau de copie et en particulier avec des matériaux de copie présentant toutes les propriétés optiques et autres (mécaniques, thermo...) requises pour l'application voulue et entre autres, une excellente résistance au flux laser.

Ce procédé doit par ailleurs, être simple, fiable, facile à mettre en oeuvre, et d'un coût peu élevé.

Le but de l'invention est de répondre, entre autres, à ces besoins.

Le but de l'invention est, également, de fournir un procédé de fabrication de composants optiques par réplication qui ne présente pas les inconvénients, défauts et limitations des procédés de l'art antérieur et qui résolve les problèmes des procédés de l'art antérieur.

Ce but, et d'autres encore, sont atteints conformément à l'invention par un procédé de fabrication d'un composant optique par réplication à partir d'une matrice dans lequel, d'une part, et afin de conditionner la matrice :

- on applique, par une technique de dépôt en phase liquide, un agent démoulant sur la matrice nettoyée ;
- on soumet la matrice recouverte de l'agent démoulant à un traitement thermique ;

  d'autre part, et afin de préparer un support de copie :

  - on applique, par une technique de dépôt en phase liquide un promoteur d'adhésion ou agent de couplage sur un substrat nettoyé ;
  - on soumet le substrat recouvert du promoteur d'adhésion ou de l'agent de couplage à un traitement thermique ;

  afin de terminer soit d'une part le traitement de la matrice, soit d'autre part la préparation du support de copie, on

applique, par une technique de dépôt en phase liquide, un matériau de copie, soit sur ladite matrice recouverte d'agent démoulant traitée thermiquement, soit sur ledit substrat recouvert de promoteur d'adhésion ou d'agent de couplage traité thermiquement, et on soumet ladite matrice ou ledit substrat recouvert de matériau de copie à un traitement thermique ;

- on amène séparément à la température de pressage la matrice ainsi conditionnée et le support de copie ainsi préparé ;
- on assemble la matrice et le support de copie, et on réalise, soit le pressage de la matrice sur le support de copie, soit le pressage du support de copie sur la matrice ;
- on maintient la température et la pression de l'assemblage pendant une durée suffisante pour assurer la réplication ;
- on sépare, après refroidissement, le support de copie, portant le composant optique répliqué, de la matrice.

Le procédé selon l'invention remédie aux inconvénients des procédés de l'art antérieur, apporte une solution aux problèmes posés par ces procédés et remplit l'ensemble des besoins indiqués plus haut.

En effet, le procédé selon l'invention répond simultanément à tous les critères énoncés, et permet de maîtriser la fabrication d'un composant optique, en un matériau adéquat présentant toutes les propriétés optiques et autres, voulues telles que transparence, plasticité et tenue au flux laser, sans que celui-ci ne subisse aucun dommage au cours des étapes mises en oeuvre, et assure finalement une reproduction fidèle, jusque là inégalée, de la matrice quelle que soit la nature de celle-ci et son profil de gravure.

En d'autres termes, le procédé selon l'invention permet de manière surprenante d'obtenir une réplication fidèle pour tout profil, tout en rendant cette réplication fidèle possible avec des matériaux de copie ayant toutes les propriétés nécessaires pour une mise en oeuvre dans tous les composants optiques.

Le procédé selon l'invention, qui est d'une grande simplicité et d'une grande fiabilité comprend un nombre limité d'étapes mettant en jeu des techniques de dépôt éprouvées et des composés connus facilement disponibles.

Le procédé est aussi relativement peu exigeant en termes de durée, il en découle que le procédé selon l'invention présente également un coût avantageux.

Le procédé selon l'invention s'applique à la fabrication de tout composant optique quelle que soit sa nature, mais il permet avantageusement de produire par réplication des composants optiques diffractifs tels que des réseaux de diffraction présentant notamment :

- une très bonne fidélité de reproduction du profil, même si celui-ci est à fort rapport d'aspect par exemple compris entre 0,2 et 1 ($0{,}2<r<1$) ;
- fonctionnant en transmission dans la gamme spectrale de l'ultraviolet au proche infrarouge ;
- possédant une haute efficacité de diffraction par exemple supérieure à 90% ainsi qu'une résistance exceptionnelle aux flux laser intenses par exemple supérieur à 25 J/cm$^2$ à 1053 nm et supérieur à 12 J/cm$^2$ à 351 nm en régime impulsionnel nanoseconde.

Le procédé selon l'invention est par ailleurs transposable facilement à des substrats de grandes dimensions susceptibles d'être mis en oeuvre par exemple dans les lasers de puissance.

Le procédé selon l'invention peut également s'appliquer à la préparation de composants à modulation de phase dénommés "lames de phase" qui présentent un profil à modulation de phase modifiant la phase de l'onde incidente.

L'agent démoulant est choisi de préférence parmi les fluoroalkylalcoxysilanes et les fluoroalkylchlorosilanes.

Un agent démoulant particulièrement préféré est le (tridécafluoro-1,1,2,2-tétrahydrooctyl)-1-trichlorosilane.

L'agent démoulant est appliqué sur la matrice nettoyée de préférence par la technique du trempage-retrait qui assure en général une meilleure uniformité du dépôt.

Le traitement thermique de la matrice recouverte de l'agent démoulant est généralement réalisé à une température de 100 à 200°C pendant une durée de 5 à 30 minutes.

Le promoteur d'adhésion ou agent de couplage est choisi de préférence parmi les fluoroalkylalcoxysilanes, et les époxyalkylalcoxysilanes.

On notera que le promoteur d'adhésion ou agent de couplage peut être choisi parmi les fluoroalkylalcoxysilanes comme dans le cas du démoulant mais il est utilisé de préférence sans catalyseur (acide, base) dans la préparation.

Un promoteur d'adhésion particulièrement préféré est le 1H,1H,2H,2H-perfluorodécyltriéthoxysilane.

Le promoteur d'adhésion ou agent de couplage est appliqué de préférence par la technique de trempage-retrait ou d'enduction centrifuge.

Le traitement thermique du substrat du support de copie recouvert du promoteur d'adhésion ou de l'agent de couplage est généralement réalisé à une température de 100 à 200°C, pendant une durée de 5 à 30 minutes.

Le matériau de copie est choisi de préférence parmi les polymères fluorés, les polymères vinyliques et les matériaux élaborés par synthèse sol-gel.

Les polymères fluorés sont de préférence des polymères organofluorés thermoplastiques choisis de préférence parmi les homopolymères et copolymères issus de la polymérisation d'un perfluoroalcène (l'alcène ayant de préférence de 2 à 10 atomes de carbone) ou de la copolymérisation d'un perfluoroalcène avec un autre monomère, de préférence un monomère perfluoré, de préférence encore un monomère de type perfluorodioxole.

Les homopolymères et copolymères préférés sont les homopolymères dans lesquels le perfluoroalcène est le tétrafluoroéthylène et l'autre monomère fluoré est un perfluorodioxole.

Les copolymères encore préférés sont les Téflon AF® de la société Du Pont de Nemours qui sont issus de la copolymérisation d'un mélange de tétrafluoroéthylène (TFE) et de 2,2-bistrifluorométhyl 4,5-difluoro 1,3-dioxole (PDD).

Le polymère fluoré peut également être choisi parmi les polymères d'organofluorocycloéthers.

Les polymères vinyliques sont choisis de préférence parmi les polyvinylpyrrolidones, les alcools polyvinyliques et les polyvinylbutyrals.

Le matériau élaboré par synthèse par voie sol-gel est généralement un matériau à base d'oxyde choisi parmi les oxydes de métaux et de métalloïdes et les mélanges de ces oxydes.

Le matériau de copie élaboré par synthèse par voie sol-gel est un matériau qui peut être choisi parmi les matériaux polymériques, oligomériques, colloïdaux et composites.

De préférence, ce matériau de copie est de la silice polymérique, oligomérique ou composite.

Le traitement thermique auquel est soumis ladite matrice ou ledit substrat est généralement réalisé à une température de 100 à 350°C pendant une durée de 15 à 60 minutes.

La température de pressage est de préférence de 100 à 350°C.

La pression lors du pressage est généralement de 1 MPa à 50 MPa et elle est appliquée généralement pendant une durée de 1 à 15 minutes.

L'invention concerne également le composant optique susceptible d'être obtenu par le procédé décrit cidessus.

Ce composant est choisi de préférence parmi les composants optiques diffractifs tels que les réseaux de diffraction, les composants à modulation de phase, et les objets ou composants présentant un relief de surface.

Le procédé de l'invention permet en particulier de préparer par réplication avec une grande fidélité des réseaux de diffraction de grande(s) dimension(s), c'est-à-dire par exemple de 440 mm de côté, et/ou présentant une haute tenue au flux laser d'un laser de puissance.

D'autres caractéristiques et avantages de l'invention apparaîtront à la lecture de la description qui suit, donnée à titre illustratif et non limitatif.

Le procédé selon l'invention implique tout d'abord la mise en oeuvre d'un maître ou matrice.

Ce maître ou cette matrice est fabriquée préalablement au procédé de réplication en tant que tel qui fait l'objet de la présente invention.

La matrice peut être en tout matériau convenable, de préférence inorganique ou organique, par exemple la matrice peut être en un matériau vitreux tel qu'un verre, par exemple un verre à base de silice tel qu'un verre silicaté, un verre borosilicaté, un verre sodocalcique, ou un verre à base de phosphate ou encore la matrice peut être en un matériau métallique ou organique, tel qu'une résine.

Cependant, la matrice est obtenue généralement par gravure d'un substrat en verre, en particulier en silice fondue pour une utilisation laser, dans lequel le profil requis est creusé.

La demande de brevet français n° 96 11378 donne des exemples de profils de gravure pour les réseaux de diffraction.

La gravure peut être réalisée par exemple par un procédé microlithographique basé sur une attaque chimique et/ou physique du substrat par exemple une attaque par un acide, un bombardement électronique ou ionique RIE ou RIBE, une écriture laser.

Ainsi, la préparation d'une matrice comprendra-t-elle généralement une étape de dépôt d'un matériau d'enregistrement, une étape d'exposition au cours de laquelle on réalise l'enregistrement holographique de la figure d'interférence, une étape de développement au cours de laquelle on réalise l'élimination chimique du matériau non-exposé et enfin une étape de gravure, par exemple du profil de diffraction, dans le substrat, de préférence en silice.

Le procédé de l'invention met en oeuvre une matrice nettoyée, en effet la matrice étant réalisée, l'application nécessite une préparation de la surface qui consiste essentiellement en son nettoyage.

La matrice est généralement nettoyée en phase vapeur par ruissellement d'un liquide adéquat porté à ébullition, choisi par exemple parmi les fluides perfluorés, les "fréons" et leurs produits de substitution, tel que le produit, commercialisé sous la dénomination de CFT 130 par la société ATEC®.

De même, le substrat du support de copie est nettoyé, par exemple en frottant sa surface avec une solution aqueuse décapante telle qu'une solution d'acide fluorhydrique ou de soude diluée, puis avec un détergent.

Le substrat du support de copie est en un matériau choisi généralement parmi les verres silicates.

Selon le procédé de l'invention, et d'une part afin de conditionner la matrice, on applique, par une technique de dépôt en phase liquide, un agent démoulant sur la matrice nettoyée.

La technique de dépôt en phase liquide peut être toute technique de dépôt en phase liquide connue telle que par exemple le trempage-retrait ("Dip coating" en anglais), l'enduction centrifuge ("Spin coating" en anglais), l'enduction laminaire ("Laminar flow coating" en anglais) ou la coulée à l'aide d'un couteau horizontal ("Tape coating" en anglais) ou la pulvérisation ("Spray coating" en anglais).

La technique du trempage-retrait est utilisée de préférence car elle assure généralement une meilleure uniformité du dépôt selon l'orientation du profil à copier.

L'agent démoulant, dont le rôle est de faciliter l'opération de séparation matrice-copie, est de préférence choisi parmi les fluoroalkylalcoxysilanes et les fluoroalkylchlorosilanes, par exemple le (tridécafluoro-1,1,2,2-tétrahydrooctyl)-1-trichlorosilane.

L'agent démoulant est généralement appliqué sous la forme d'une solution dans un solvant adéquat, ce solvant est généralement choisi parmi les alcools qu'ils soient primaires, secondaires ou tertiaires, les solvants perfluorés et les chlorofluoroalcanes (fréons).

Les alcools sont choisis de préférence parmi les alcools aliphatiques linéaires ou ramifiés de 1 à 5 atomes de carbone.

Les solvants perfluorés sont choisis de préférence parmi les perfluoroalkylamines tels que les composés commercialisés sous la dénomination de Fluorinert® série FC par la société 3M, les perfluoropolyéthers tels que les composés commercialisés sous la dénomination Galden® série HT par la société Ausimont-Montedison et les perfluoroalcanes.

Les "fréons" sont choisis de préférence parmi les composés commercialisés sous la dénomination Flutec® par la société Rhône-Poulenc, ou sous la dénomination CFT® par la société ATEC.

La concentration de l'agent démoulant dans la solution est généralement de 0,1 à 2% en masse, c'est-à-dire qu'il s'agit de préférence d'une solution diluée.

De préférence, on utilisera une solution à 1% en masse de (tridécafluoro-1,1,2,2,-tétrahydrooctyl)-1, trichlorosilane (commercialisé par exemple par la société HULS®) en tant qu'agent démoulant, dans le composé de formule :

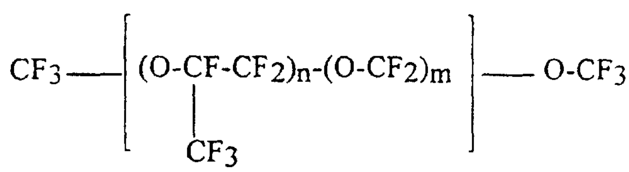

en tant que solvant, ce dernier composé étant commercialisé sous la dénomination Galden® HT 110 par Ausimont-Montedison®.

L'épaisseur du revêtement d'agent démoulant est généralement de 1 à 20 nanomètres.

Toujours dans le cadre du conditionnement de la matrice, on soumet ensuite la matrice recouverte de l'agent démoulant à un traitement thermique afin de favoriser le greffage après le dépôt.

Le traitement thermique est généralement réalisé à une température de 100 à 200°C de préférence de 150°C pendant une durée de 5 à 30 minutes, de préférence de 15 minutes.

Selon le procédé de l'invention, d'autre part (c'est-à-dire séparément du conditionnement de la matrice), et afin de préparer un support de copie :

- on applique par une technique de dépôt en phase liquide, un promoteur d'adhésion ou agent de couplage sur un substrat nettoyé.

Ce promoteur d'adhésion ou agent de couplage a pour but de faciliter l'accrochage du matériau répliqué sur son support.

La technique de dépôt en phase liquide mise en oeuvre est choisie généralement parmi les techniques déjà mentionnées ci-dessus, de préférence on utilisera le trempage-retrait ou l'enduction centrifuge.

Le promoteur d'adhésion ou agent de couplage est de préférence choisi parmi les fluoroalkylalcoxysilanes et les époxyalkylalcoxysilanes.

Le promoteur d'adhésion est généralement appliqué sous la forme d'une solution dans un solvant adéquat, ce solvant est généralement choisi parmi les alcools, et les solvants perfluorés, de préférence les alcools aliphatiques linéaires ou ramifiés de 1 à 5 atomes de carbone, tels que le butanol-1.

La concentration de l'agent de couplage ou promoteur d'adhésion est généralement de 0,5 à 3 % en masse,

c'est-à-dire qu'il s'agit de préférence d'une solution diluée.

De préférence, on utilisera une solution à 2% en masse de 1H, 1H, 2H, 2H-perfluorodécyltriéthoxysilane, dans le butanol-1.

L'épaisseur du revêtement d'agent de couplage ou promoteur d'adhésion est généralement de 1 à 20 nm.

Toujours dans le cadre de la préparation du support de copie, on soumet ensuite le substrat recouvert du promoteur d'adhésion ou de l'agent de couplage à un traitement thermique afin de favoriser le greffage après le dépôt.

Le traitement thermique est généralement réalisé à une température de 100 à 200°C, de préférence de 150°C, pendant une durée de 5 à 30 minutes, de préférence de 15 minutes.

Selon le procédé de l'invention, et afin de terminer soit d'une part le conditionnement de la matrice, soit d'autre part la préparation du support de copie, on applique par une technique de dépôt en phase liquide, un matériau de copie encore appelé matériau à profiler ou à presser, soit sur ladite matrice recouverte d'agent démoulant traité thermiquement comme décrit ci-dessus, soit sur ledit substrat recouvert de promoteur d'adhésion ou d'agent de couplage traité thermiquement comme décrit ci-dessus.

Cette étape d'application du matériau de copie, qu'elle se fasse sur ladite matrice ou sur ledit substrat est réalisée dans les mêmes conditions.

Dans le premier cas, ou première variante du procédé selon l'invention, le procédé sera plutôt dénommé procédé de réplication par coulée, et dans le second cas, ou seconde variante du procédé selon l'invention, le procédé sera plutôt dénommé procédé de réplication par pressage.

C'est-à-dire que si le matériau à répliquer est sur la matrice, on parlera de "coulée" et si le matériau à répliquer est sur le support, on parlera de pressage.

Il est à noter, comme cela ressort clairement de la description qui précède et qui va suivre du procédé selon l'invention, que les deux variantes du procédé sont, pour l'essentiel de leurs étapes, similaires, et ne se différencient légèrement que par le support, ou substrat sur lequel est appliqué - par ailleurs dans les mêmes conditions - le matériau de copie.

La technique de dépôt en phase liquide mise en oeuvre pour le dépôt de matériau de copie est généralement choisie parmi les techniques déjà mentionnées plus haut, de préférence on utilisera le trempage-retrait ou l'enduction centrifuge.

Le matériau de copie est généralement choisi parmi les matériaux convenant pour la fabrication de composants optiques.

Dans le cadre notamment de l'application préférée selon l'invention, c'est-à-dire pour la fabrication de composants optiques diffractifs tels que des réseaux de diffraction, ce matériau est, de préférence, un matériau de haute transparence dans le domaine de longueur d'onde ultraviolet (250 à 400 nm), visible (400 à 800 nm) ou proche infrarouge (800-2000 nm) et de préférence à tenue au flux laser élevée, c'est-à-dire généralement supérieure à 12 J/cm$^2$ à 351 nm et 3 ns de durée d'impulsion ou supérieure à 25 J/cm$^2$ à 1053 nm et 3 ns de durée d'impulsion.

Pour la préparation d'autres composants optiques, le matériau aura des propriétés adaptées aux contraintes impliquées par ce composant, mais dans tous les cas, le procédé selon l'invention permet une réplication fidèle conservant intégralement les propriétés requises du matériau.

Le matériau de copie est ainsi choisi généralement parmi les polymères fluorés, de préférence les polymères organofluorés thermoplastiques, les polymères vinyliques et les matériaux élaborés par synthèse sol-gel.

Les polymères organofluorés thermoplastiques sont choisis de préférence parmi les homopolymères et copolymères de préférence amorphes, issus de l'homolymérisation d'un perfluorosilane ou de la copolymérisation d'un perfluoroalcène tel que le tétrafluoroéthylène, avec un autre monomère, de préférence un monomère perfluoré, tel qu'un perfluorodioxole.

Des exemples de tels polymères et copolymères sont les produits commercialisés sous le nom général de Téflon®, tels que Téflon® AF par la société Du Pont de Nemours.

Les Téflon AF® sont issus de la copolymérisation d'un mélange de tétrafluoroéthylène (TFE) et de 2,2-bistrifluorométhyl 4,5-difluoro 1,3-dioxole (PDD).

Plus précisément on préférera le Téflon AF® 1600 qui a un Tg de 160°C.

Un autre exemple d'un tel polymère organofluoré est le produit de type organofluorocycloéther polymère soluble commercialisé par la société ASAHI GLASS COMPANY sous le nom de CYTOP®, et de formule

$$(\text{-}CF_2\text{-}CF(CF_2)(O\text{-}CF_2\text{-}CF_2)CF\text{-}CF_2\text{-})_n.$$

Les polymères vinyliques sont choisis de préférence parmi les polyvinylpyrrolidones (PVP), les alcools polyvinyliques et les polyvinylbutyrals.

Les matériaux élaborés par synthèse par voie sol-gel qui constituent le matériau de copie sont généralement des matériaux à base d'oxydes choisis parmi les oxydes de métaux et de métalloïdes et les mélanges de ces oxydes.

Parmi les oxydes de métaux ou de métalloïde, on peut citer par exemple l'oxyde de titane, l'oxyde de tantale, l'oxyde d'yttrium, l'oxyde de scandium, l'oxyde de zirconium, l'oxyde de hafnium, l'oxyde de thorium, l'oxyde de niobium, l'oxyde de lanthane, l'oxyde d'aluminium, l'oxyde de zirconium et l'oxyde de silicium.

Par synthèse sol-gel, on entend l'un quelconque des procédés connus de l'homme du métier sous le nom de procédé "sol-gel" dans lequel le matériau sol-gel (c'est-à-dire le matériau élaboré par synthèse par voie sol-gel) à base d'oxyde de métal ou de métalloïde est généralement préparé par hydrolyse - condensation de composés précurseurs, par exemple de composé précurseurs organométalliques tels que des alcoxydes, ou de sels métalliques, tels que des chlorures, nitrates, ou autres ...

De manière générale, les systèmes de procédés sol-gel peuvent être classés globalement - sans que cela n'entraîne aucune limitation - en deux catégories : à savoir d'une part les procédés ou systèmes polymériques, et d'autre part les procédés ou systèmes colloïdaux.

Le matériau de copie élaboré par synthèse par voie sol-gel sera ainsi dénommé par exemple matériau polymérique ou oligomérique ou encore matériau colloïdal ou encore composite : il pourra s'agir d'un matériau à base de l'un quelconque des oxydes de métaux et de métalloïde et de leurs mélanges décrits plus haut.

Un matériau préféré est la silice dite "silice polymérique" ou encore la silice dite " silice oligomérique".

Une telle silice est préparée à l'aide d'une parmi les quatre types de solutions traitantes suivantes :

- $SiO_2$ polymérique en milieu HCl préparée à partir d'une solution mère ayant une concentration en $SiO_2$ de 10,6%, un rapport molaire $[H_2O]/[SiO_2]$ de 10, un pH voisin de 2, mûrie pendant un mois, et diluée jusqu'à obtenir une concentration en $SiO_2$ de 3,75% ;
- $SiO_2$ polymérique en milieu $HNO_3$ préparée dans les mêmes conditions que ci-dessus ; et
- $SiO_2$ préparée selon les conditions proposées par S. MAEKAWA et T. OHISHI, dans J. Of Non-Crystalline Solids, 169, 1994, p. 207 ($[SiO_2]$=2,4%, $[H_2O]/[SiO_2]$=12 et pH≈2, agitation durant une nuit, mais sans insoler la solution sous les UV, contrairement à la publication).

Il est à noter que l'utilisation de $SiO_2$ préparée selon un mélange de tétraéthoxysilane en milieu éthanolique avec une solution de catalyse acide HCl telle que $[SiO_2]$=2,4%, $[H_2O]/[SiO_2]$=2, 4%, $[H_2O]/[SiO_2]$=12 et pH≈2, après agitation d'une nuit, toujours sans insolation aux UV est équivalente à la préparation précédente.

Les deux dernières préparations sont dénommées "silice oligomérique".

Un autre type encore de matériau de copie élaboré par synthèse par voie sol-gel est un matériau composite comprenant des colloïdes d'oxyde de métal, de préférence de silice, enrobés dans un liant, de préférence un liant siloxane, un tel matériau est dénommé par exemple "silice composite".

Comme on l'a déjà indiqué plus haut le matériau de copie choisi dépend du composant optique que l'on souhaite obtenir et notamment du domaine de longueur d'onde dans lequel il est mis en oeuvre.

Ainsi, parmi les trois familles de matériaux de copie cités plus haut, les polymères organofluorés seront de préférence utilisés pour une application dans un large domaine spectral allant de l'ultraviolet au proche infrarouge, compte tenu de leurs excellentes propriétés optiques, et de tenue au flux laser, dans tout ce domaine, alors que les matériaux sol-gel ou vinyliques seront davantage destinés à une utilisation dans le visible ou le proche infrarouge.

Dans le cas des polymères organofluorés et des polymères vinyliques, le matériau de copie est généralement appliqué sous la forme d'une solution dans un solvant adéquat ; ce solvant est généralement choisi parmi les alcools, les solvants perfluorés et les chlorofluoroalcanes (fréons).

Ces solvants ont déjà été décrits plus en détail ci-dessus dans le cadre de l'application de l'agent démoulant.

La concentration du matériau de copie polymère organofluoré ou polymère vinylique dans la solution est généralement de 1 à 12% en masse de préférence 6% en masse.

De préférence, on utilisera en tant que matériau de copie, pour la réplication d'un réseau de diffraction fonctionnant dans l'ultraviolet, le Téflon®AF 1600 mentionné plus haut dont la température de transition vitreuse Tg est de 160°C.

Ce matériau de copie est dilué soit dans le solvant FC 75® commercialisé par la société 3M qui est une perfluoroalkylamine, soit dans le Galden® HT110 commercialisé par la société Ausimont dans une proportion de 1 à 12% en masse et préférentiellement de 6%.

Les conditions du dépôt peuvent être facilement déterminées en fonction de l'épaisseur du film déposé qui est généralement de 0,1 à 5 μm, et qui et par exemple maîtrisée en fonction de la profondeur du profil à copier.

Par exemple, avec une solution de Téflon AF® à 6% en masse, une épaisseur de 0,7 μm est appliquée en un seul dépôt centrifuge à la vitesse de 700 tours/minute.

De même, les conditions du dépôt dans le cas des matériaux de copie élaborés par synthèse par voie sol-gel peuvent être facilement déterminées en fonction de l'épaisseur du revêtement ou film déposé qui est généralement de 0,1 à 5 μm.

Si l'on dépose un revêtement d'une épaisseur importante par exemple de 1 à 5 μm, on peut le déposer non

plus en une mais en plusieurs étapes de dépôt, c'est-à-dire de 2 à 10 étapes, par lesquelles on dépose chaque fois une couche de matériau de copie d'une épaisseur de 0,5 à 2 μm.

Selon l'invention, on soumet ladite matrice ou ledit substrat ainsi recouvert du matériau de copie à un traitement thermique afin de favoriser le greffage après le dépôt.

Le traitement thermique est généralement réalisé à une température de 100 à 350°C, de préférence de 250°C pendant une durée de 15 à 60 minutes, de préférence de 30 minutes.

Dans le cas où le matériau de copie est un polymère vinylique ou organofluoré la température de traitement est généralement supérieure au Tg (température de transition vitreuse) dudit polymère qui est par exemple de 250°C dans le cas du Téflon AF® 1600.

Si le revêtement de matériau de copie, comme indiqué plus haut, a une épaisseur importante par exemple de 1 à 5 μm, c'est-à-dire dans le cas où ce revêtement est appliqué, déposé, en plusieurs étapes de dépôt ("multidépôt") par lesquelles on dépose chaque fois une couche de matériau de copie, on effectue de préférence un traitement intermédiaire après chaque étape de dépôt, à une température de 100 à 250°C, de préférence de 150°C, pendant une durée de 5 à 30 minutes, de préférence de 15 minutes.

On peut aussi toutefois réaliser le traitement thermique sur l'ensemble du revêtement déposé après toutes les étapes de dépôt.

Selon l'invention, et préalablement à l'étape de pressage, on amène séparément à la température de pressage la matrice ainsi conditionnée et le support de copie ainsi préparé, comme cela a été décrit ci-dessus.

En d'autres termes, la matrice et le support de copie, judicieusement préparés doivent être mis en température séparément.

Les deux éléments sont donc amenés dissociés à la température minimale de pressage qui est généralement de 100 à 350°C de préférence de 250°C.

Dans le cas où le matériau de copie est un polymère vinylique ou organofluoré cette température de pressage est généralement supérieure au Tg dudit polymère par exemple, cette température de pressage est supérieure à 250°C dans le cas du Téflon AF® 1600.

Selon l'invention, on assemble ensuite la matrice et le support de copie, cet assemblage des deux éléments est réalisé par exemple par rapprochement mécanique.

On effectue ensuite soit le pressage ou emboutissage de la matrice sur le support de copie (1ère variante : procédé de réplication par pressage), soit le pressage du support de copie sur la matrice (2ème variante : procédé de réplication par coulée).

Ce pressage ou emboutissage est réalisé par exemple par un procédé purement mécanique, par un procédé hydraulique ou par un procédé pneumatique.

Le maintien en température et le pressage des éléments doivent être généralement simultanés pour assurer la fidélité de reproduction.

On maintient la température citée ci-dessus et la pression de l'assemblage pendant une durée suffisante pour assurer la réplication.

La pression lors du pressage est généralement de 1 MPa à 50 MPa et elle est appliquée pendant une durée de 1 à 15 minutes.

Préférentiellement, dans le cas du Téflon AF® 1600, on utilise une presse hydraulique par exemple de la marque Hydromat® à une pression de 10 MPa pendant 5 minutes.

Le système de chauffage est ensuite arrêté et la température de l'ensemble matrice et copie amorce une décroissance par refroidissement inertiel.

Parallèlement, la pression est maintenue jusqu'au retour à température ambiante.

La copie répliquée est alors découplée de la matrice lors de l'opération de démoulage.

Cette opération, consistant à séparer le support de copie de la matrice, s'effectue le plus généralement sans assistance particulière, à température ambiante ou éventuellement à chaud, par exemple à une température de 50 à 200°C, mais en tout état de cause à une température inférieure au Tg du polymère qui constitue éventuellement le matériau de copie.

Les exemples suivants, donnés à titre illustratif et non limitatif illustrent le procédé de l'invention

EXEMPLE 1

On prépare par le procédé selon l'invention (variante de réplication par pressage) la copie répliquée d'un réseau de diffraction à 351 nm comprenant 2497 traits/mm et ayant une profondeur et un taux de remplissage indiqués dans le tableau I suivant.

Les conditions du procédé sont généralement celles décrites plus haut avec les particularités suivantes :

Conditionnement de la matrice :

- Matrice : silice
- Agent démoulant : (tridécafluoro-1,1,2,2-tétrahydrooctyl)-1,trichlorosilane fourni par la société HULS®, appliqué par trempage retrait, avec une vitesse de retrait 5 cm/min, sous la forme d'une solution à 1% en masse dans le solvant Galden®HT 110 ;
- Traitement thermique de la matrice recouverte d'agent démoulant : 150°C pendant 15 minutes (chauffage à l'étuve).

Préparation du support de copie :

- Substrat : silice
- Promoteur d'adhésion : 1H ,1H, 2H, 2H-perfluorodécyltrièthoxysilane fourni par la société PCR® Inc, appliqué par "Spin-coating" à 700 t/min sous la forme d'une solution à 2% en masse dans le butanol-1 ;
- Traitement thermique du substrat : 150°C pendant 15 minutes (chauffage à l'étuve) ;
- Matériau de copie :Téflon AF® 1600 ;
- Application du matériau de copie en un seul dépôt par enduction centrifuge à la vitesse de 700 tours/minutes sous la forme d'une solution à 6% en masse dans le solvant Galden® HT 110.
- Epaisseur du dépôt :1 µm
- Traitement thermique du substrat recouvert du matériau de copie : 250°C pendant 30 minutes.
- Mise en température de la matrice et du support de copie : la mise en température est réalisée par cordon chauffant et la température minimale de pressage est de 270°C.

Emboutissage-pressage :

Le pressage est réalisé dans une presse hydraulique de marque HYDROMAT ® à une pression de 10 MPa à 270°C pendant une durée de 5 minutes.
Les caractéristiques de la copie répliquée en TEFLON® du réseau obtenue (profondeur, taux de remplissage) sont indiquées dans le tableau I.

EXEMPLE 2

On prépare par le procédé selon l'invention la copie répliquée d'un réseau de diffraction à 1053 nm comprenant 802 traits par mm et ayant une profondeur et un taux de remplissage indiqués dans le tableau I.

Les conditions du procédé sont les mêmes que celles de l'exemple 1 ci-dessus.

Les caractéristiques de la copie répliquée en TEFLON® du réseau obtenue sont indiquées dans le tableau I.

TABLEAU I

| EXEMPLE | RESEAUX | PROCEDE | ELEMENT | Profondeur (µm) | Taux de remplissage |
|---|---|---|---|---|---|
| 1 | à 351 nm | 10 MPa | matrice silice | 0,67 | 0,4 |
| | (2497 traits/mm) | 270°C | copie Téflon | 0,66 | 0,6 |
| 2 | à 1053 nm | 10 MPa | matrice silice | 1,95 | 0,4 |
| | (802 traits/mm) | 270°C | copie Téflon | 1,95 | 0,6 |

Les données expérimentales du tableau I démontrent la fidélité de la réplication par le procédé de l'invention.

En particulier, on remarque que les profondeurs obtenues sont équivalentes et que les taux de remplissage de la matrice et la réplique correspondante sont complémentaires l'un de l'autre.

EXEMPLE 3

On prépare par le procédé selon l'invention (pressage) la copie répliquée en Téflon AF® d'un réseau de diffraction dont la matrice est gravée à 150 traits/mm, les traits ayant 1,97 µm de profondeur.
La matrice et la copie sont observées par microscopie à effet tunnel, on constate que le profil est intégralement conservé.

**Revendications**

1. Procédé de fabrication d'un composant optique par réplication à partir d'une matrice dans lequel, d'une part, et afin de conditionner la matrice

   - on applique, par une technique de dépôt en phase liquide, un agent démoulant sur la matrice nettoyée ;
   - on soumet la matrice recouverte de l'agent démoulant à un traitement thermique ;
     d'autre part, et afin de préparer un support de copie :

     - on applique, par une technique de dépôt en phase liquide un promoteur d'adhésion ou agent de couplage sur un substrat nettoyé ;
     - on soumet le substrat recouvert du promoteur d'adhésion ou de l'agent de couplage à un traitement thermique ;

     afin de terminer soit d'une part le traitement de la matrice, soit d'autre part la préparation du support de copie, on applique, par une technique de dépôt en phase liquide, un matériau de copie, soit sur ladite matrice recouverte d'agent démoulant traitée thermiquement, soit sur ledit substrat recouvert de promoteur d'adhésion ou d'agent de couplage traité thermiquement et on soumet ladite matrice ou ledit substrat recouvert de matériau de copie à un traitement thermique ;
   - on amène séparément à la température de pressage la matrice ainsi conditionnée et le support de copie ainsi préparé ;
   - on assemble la matrice et le support de copie, et on réalise soit le pressage de la matrice sur le support de copie, soit le pressage du support de copie sur la matrice ;
   - on maintient la température et la pression de l'assemblage pendant une durée suffisante pour assurer la réplication ;
   - on sépare, après refroidissement, le support de copie, portant le composant optique répliqué, de la matrice.

2. Procédé selon la revendication 1, dans lequel l'agent démoulant est choisi parmi les fluoroalkylalcoxysilanes et les fluoroalkylchlorosilanes.

3. Procédé selon la revendication 2, dans lequel l'agent démoulant est le (tridécafluoro-1,1,2,2-tétrahydrooctyl)-1-trichlorosilane.

4. Procédé selon l'une quelconque des revendications 1 à 3 dans lequel l'agent démoulant est appliqué par trempage-retrait.

5. Procédé selon la revendication 1, dans lequel le traitement thermique de la matrice recouverte d'agent démoulant est réalisé à une température de 100 à 200°C pendant une durée de 5 à 30 minutes.

6. Procédé selon la revendication 1, dans lequel l'agent de couplage ou promoteur d'adhésion est choisi parmi les fluoroalkylalcoxysilanes, et les époxyalkylalcoxysilanes.

7. Procédé selon la revendication 6, dans lequel l'agent de couplage ou promoteur d'adhésion est le 1H,1H,2H,2H-perfluorodécyl triéthoxysilane.

8. Procédé selon la revendication 1, dans lequel le promoteur d'adhésion ou l'agent de couplage est appliqué par trempage-retrait ou enduction centrifuge.

**9.** Procédé selon la revendication 1, dans lequel le traitement thermique du substrat recouvert du promoteur d'adhésion ou de l'agent de couplage est réalisé à une température de 100 à 200°C pendant une durée de 5 à 30 minutes.

**10.** Procédé selon la revendication 1, dans lequel le matériau de copie est choisi parmi les polymères fluorés, les polymères vinyliques et les matériaux élaborés par synthèse sol-gel.

**11.** Procédé selon la revendication 10, dans lequel lesdits polymères fluorés sont choisis parmi les homopolymères et copolymères issus de la polymérisation d'un perfluoroalcène, ou de la copolymèrisation d'un perfluoroalcène avec un autre monomère perfluoré tel qu'un perfluorodioxole ; et les polymères d'organofluorocycloéthers.

**12.** Procédé selon la revendication 11, dans lequel ledit perfluoroalcène est le tétrafluoroéthylène et ledit autre monomère perfluoré est un perfluorodioxole.

**13.** Procédé selon la revendication 12, dans lequel les copolymères sont issus de la copolymérisation d'un mélange de tétrafluoroéthylène et de 2,2-bistrifluorométhyl 4,5-difluoro 1,3-dioxole.

**14.** Procédé selon la revendication 10, dans lequel les polymères vinyliques sont choisis parmi les polyvinylpyrrolidones, les alcools polyvinyliques et les polyvinylbutyrals.

**15.** Procédé selon la revendication 10, dans lequel lesdits matériaux élaborés par synthèse sol-gel sont choisis parmi les matériaux à base d'oxydes choisis parmi les oxydes de métaux et de métalloïdes et les mélanges de ces oxydes.

**16.** Procédé selon la revendication 10 ou 15, dans lequel lesdits matériaux élaborés par synthèse par voie sol-gel sont choisis parmi les matériaux polymériques, oligomériques, colloïdaux et composites.

**17.** Procédé selon la revendication 16, dans lequel ledit matériau de copie est de la silice polymérique, oligomérique ou composite.

**18.** Procédé selon la revendication 1, dans lequel le traitement thermique de la matrice ou du substrat recouvert de matériau de copie est réalisé à une température de 100 à 350°C pendant une durée de 15 à 60 minutes.

**19.** Procédé selon la revendication 1, dans lequel le pressage est réalisé à une température de 100 à 350°C et à une pression de 1 MPa à 50 MPa pendant une durée de 1 à 15 minutes.

**20.** Composant optique susceptible d'être obtenu par le procédé selon l'une quelconque des revendications 1 à 19.

**21.** Composant optique selon la revendication 20 choisi parmi les composants optiques diffractifs et les composants à modulation de phase, et les objets ou composants présentant un relief de surface.

**22.** Composant optique selon la revendication 21 qui est un réseau de diffraction.

**23.** Composant optique selon la revendication 22 qui est de grande(s) dimension(s) et/ou de haute tenue au flux laser d'un laser de puissance.

## Claims

**1.** Method of fabricating an optical component by replication using a matrix in which, firstly and in order to treat the matrix:

- a release agent is applied to the cleaned matrix using a liquid phase depositing technique;
- the matrix coated with the release agent is subjected to heat treatment;

  and secondly, and in order to prepare a copy carrier:

  - an adhesion promoter or coupling agent is applied to a cleaned substrate using a liquid phase depositing technique,
  - the substrate coated with the adhesion promoter or coupling agent is subjected to heat treatment;

in order to complete either the treatment of the matrix or the preparation of the copy carrier, a copy material is applied using a liquid phase depositing technique either to said heat-treated matrix coated with release agent, or to said heat-treated substrate coated with adhesion promoter or coupling agent, and said matrix and said substrate coated with copy material are subjected to heat treatment;

- the matrix so treated and the copy carrier so prepared are brought separately to embossing temperature;
- the matrix and the copy carrier are assembled, and either the matrix is embossed onto the copy carrier, or the copy carrier is embossed onto the matrix;
- the assembly temperature and pressure are maintained for sufficient time to ensure replication;
- after cooling, the copy carrier carrying the replicated optical component is separated from the matrix.

**2.** Method according to claim 1, in which the release agent is chosen from among the fluoroalkylalkoxysilanes and fluoroalkylchlorosilanes.

**3.** Method according to claim 2, in which the release agent is (tridecafluoro-1,1,2,2-tetrahydrooctyl)-1-trichlorosilane.

**4.** Method according to any of claims 1 to 3, in which the release agent is applied by dip coating.

**5.** Method according to claim 1, in which the heat treatment of the matrix coated with release agent is conducted at a temperature of 100 to 200°C for a time interval of 5 to 30 minutes.

**6.** Method according to claim 1, in which the coupling agent or adhesion promoter is chosen from among the fluoroalkylalkoxysilanes, and the epoxyalkylalkoxysilanes.

**7.** Method according to claim 6, in which the coupling agent or adhesion promoter is 1H,1H,2H,2H-perfluorodecyl triethoxysilane.

**8.** Method according to claim 1, in which the adhesion promoter or coupling agent is applied by dip-coating or spin coating.

**9.** Method according to claim 1, in which the heat treatment of the substrate coated with adhesion promoter or coupling agent is conducted at a temperature of 100 to 200°C for a time interval of 5 to 30 minutes.

**10.** Method according to claim 1, in which the copy material is chosen from among the fluorine-containing polymers, vinyl polymers, and materials produced by sol-gel synthesis.

**11.** Method according to claim 10, in which said fluorine-containing polymers are chosen from among the homopolymers and copolymers derived from polymerization of a perfluoroalkene, or from the copolymerization of perfluoroalkene with another perfluorine monomer such as a perfluorodioxole; and the polymers of organofluorocycloethers.

**12.** Method according to claim 11, in which said perfluoroalkene is tetrafluoroethylene and said other perfluorine monomer is a perfluorodioxole.

**13.** Method according to claim 12, in which the copolymers are derived from the copolymerization of a mixture of tetrafluoroethylene and 2,2-bistrifluoromethyl 4,5-difluoro 1,3-dioxole.

**14.** Method according to claim 10, in which the vinyl polymers are chosen from among the polyvinylpyrrolidones, polyvinyl alcohols and polyvinylbutyrals.

**15.** Method according to claim 10, in which said materials produced by sol-gel synthesis are chosen from among materials containing oxides chosen from among metal and metalloid oxides and mixtures of these oxides.

**16.** Method according to claim 10 or 15, in which said materials produced by sol-gel synthesis are chosen from among polymeric, oligomeric, colloidal and composite materials.

**17.** Method according to claim 16, in which said copy material is polymeric, oligomeric, or composite silica.

**18.** Method according to claim 1, in which the heat treatment of the matrix or substrate coated with copy material is

conducted at a temperature of 100 to 350°C for a time interval of 15 to 60 minutes.

**19.** Method according to claim 1, in which embossing is conducted at a temperature of 100 to 350°C and at a pressure of 1 MPa to 54 MPa for a time interval of 1 to 15 minutes.

**20.** Optical component able to be obtained with the method according to any of claims 1 to 19.

**21.** Optical component according to claim 20 chosen from among diffractive optical components and phase modulation components, and objects or components having surface relief.

**22.** Optical component according to claim 21, which is a diffraction network.

**23.** Optical component according to claim 22, which is of large size and/or has high resistance to laser flow from a power laser.

**Patentansprüche**

**1.** Verfahren zur Herstellung eines optischen Elements durch Replikation, wobei man von einer Matrize ausgeht, wobei man
einerseits und um die Matrize zu konditionieren,

- durch Flüssigphasenabscheidung ein Entformungsmittel auf die gereinigte Matrix aufbringt und
- die mit dem Entformungsmittel bedeckte Matrix einer thermischen Behandlung unterwirft;
  und andererseits und um einen Kopierträger herzustellen,

  - durch Flüssigphasenabscheidung einen Haftungspromotor oder einen Kuppler auf ein gereinigtes Substrat aufbringt und
  - das mit dem Haftungspromotor oder dem Kuppler bedeckte Substrat einer thermischen Behandlung unterwirft; und

  um entweder einerseits die Behandlung der Matrix oder andererseits die Herstellung des Kopienträgers zu beenden, durch Flüssigphasenabscheidung ein Kopienmaterial entweder auf die mit dem Entformungsmittel bedeckte, thermisch behandelte Matrix oder auf das mit dem Haftungspromotor oder dem Kuppler bedeckte, thermisch behandelte Substrat aufbringt und die Matrix oder das Substrat, die (das) mit dem Kopienmaterial bedeckt ist, einer thermischen Behandlung unterzieht;
- die so konditionierte Matrix und den so hergestellten Kopienträger getrennt auf die Presstemperatur bringt;
- die Matrix und den Kopienträger zusammenfügt und entweder die Matrix auf den Kopienträger presst oder den Kopienträger auf die Matrix presst;
- die Temperatur und das Pressen der Gesamtanordnung für eine ausreichende Zeitspanne aufrechterhält, um die Replikation zu gewährleisten; und
- nach dem Abkühlen den Kopienträger, der das replizierte optische Element trägt, von der Matrix trennt.

**2.** Verfahren nach Anspruch 1, worin das Entformungsmittel ausgewählt wird unter den Fluoroalkylalkoxysilanen und den Fluoroalkylchlorosilanen.

**3.** Verfahren nach Anspruch 2, worin das Entformungsmittel das (Tridecafluoro-1,1,2,2-tetrahydrooctyl)-1-trichlorosilan ist.

**4.** Verfahren nach einem der Ansprüche 1 bis 3, worin das Entformungsmittel durch Aushärtungsschrumpfen aufgebracht wird.

**5.** Verfahren nach Anspruch 1, worin die thermische Behandlung der mit dem Entformungsmittel bedeckten Matrix bei einer Temperatur von 100 bis 200 °C 5 bis 30 min lang durchgeführt wird.

**6.** Verfahren nach Anspruch 1, worin der Kuppler oder Haftungspromotor ausgewählt wird aus den Fluoroalkylalkoxysilanen und den Epoxyalkylalkoxysilanen.

7. Verfahren nach Anspruch 6, worin der Kuppler oder Haftungspromotor 1H,1H,2H,2H-Perfluorodecyltriethoxysilan ist.

8. Verfahren nach Anspruch 1, worin der Haftungspromotor oder Kuppler durch Abschreckungsschrumpfen oder Schleuderbeschichten aufgebracht wird.

9. Verfahren nach Anspruch 1, worin die thermische Behandlung des mit dem Haftungspromotor oder dem Kuppler bedeckten Substrats bei einer Temperatur von 100 bis 200 °C 5 bis 30 min lang durchgeführt wird.

10. Verfahren nach Anspruch 1, worin das Kopienmaterial ausgewählt wird unter den fluorierten Polymeren, den Vinylpolymeren und den durch Sol-Gel-Synthese hergestellten Materialien.

11. Verfahren nach Anspruch 10, worin die fluorierten Polymeren ausgewählt werden unter den Homopolymeren und Copolymeren, die hergestellt wurden durch Polymerisation eines Perfluoroalkens oder Copolymerisation eines Perfluoroalkens mit einem anderen perfluorierten Monomer wie einem Perfluorodioxol, und den Polymeren von Organofluorocycloethern.

12. Verfahren nach Anspruch 11, worin das Perfluoroalken das Tetrafluoroethylen ist und das andere perfluorierte Monomer ein Perfluorodioxol ist.

13. Verfahren nach Anspruch 12, worin die Copolymeren hergestellt wurden durch Copolymerisation einer Mischung von Tetrafluoroethylen und 2,2-Bistrifluoromethyl-4,5-difluoro-1,3-dioxol.

14. Verfahren nach Anspruch 10, worin die Vinylpolymeren ausgewählt werden unter den Polyvinylpyrrolidonen, den Polyvinylalkoholen und den Polyvinylbutyralen.

15. Verfahren nach Anspruch 10, worin die durch Sol-Gel-Synthese hergestellten Materialien ausgewählt werden unter den Materialien auf Basis von Oxiden, die ausgewählt werden aus den Oxiden von Metallen, Metalloiden und Mischungen dieser Oxide.

16. Verfahren nach Anspruch 10 oder 15, worin die durch Sol-Gel-Synthese hergestellten Materialien ausgewählt werden unter den polymeren, oligomeren, kolloidalen und zusammengesetzten (Verbund-)Materialien.

17. Verfahren nach Anspruch 16, worin das Kopienmaterial polymeres, oligomeres oder zusammengesetztes (Verbund-)Siliciumdioxid ist.

18. Verfahren nach Anspruch 1, worin die thermische Behandlung der Matrix oder des Substrats, die (das) von dem Kopienmaterial bedeckt ist, bei einer Temperatur von 100 bis 350 °C 15 bis 60 min lang durchgeführt wird.

19. Verfahren nach Anspruch 1, worin das Pressen bei einer Temperatur von 100 bis 350 °C und bei einem Druck von 1 bis 50 MPa 1 bis 15 min lang durchgeführt wird.

20. Optisches Element, hergestellt nach dem Verfahren nach einem der Ansprüche 1 bis 19.

21. Optisches Element nach Anspruch 20, ausgewählt aus optischen Beugungselementen und Phasenmodulations-Elementen und Gegenständen oder Elementen, die ein Oberflächenrelief aufweisen.

22. Optisches Element nach Anspruch 21, bei dem es sich um ein Beugungsgitter handelt.

23. Optisches Element nach Anspruch 22, das große Dimensionen und/oder eine hohe Beständigkeit gegenüber dem Laserstrom eines Hochleistungslasers aufweist.

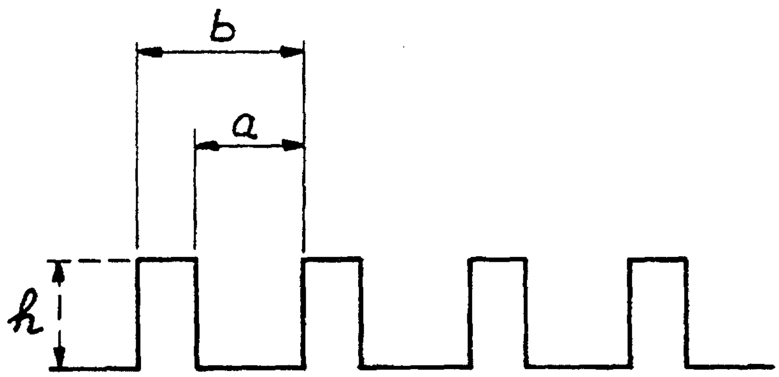


FIG. 1